# EUROPEAN PATENT APPLICATION

(11) **EP 4 636 964 A1**
(43) Date of publication of application: **22.10.2025**
(21) Application number: 24170818.9
(22) Date of filing: 17.04.2024
(51) Int. Cl.: H02B 13/025, H02B 1/56

(54) **MULTIFUNCTIONAL DUCT FOR A COMPARTMENT OF A SWITCHGEAR**

(71) Applicant: ABB SCHWEIZ AG, 5400 Baden (CH)
(72) Inventor: ZLATNIK, Rostislav, 794 01 Hostálkovy (CZ); PELLEGRINI, Claudio, 62100 Brno (CZ)
(74) Representative: Maiwald GmbH

(57) **Abstract**

The present invention relates to a multifunctional duct (10) for a compartment (100) of a switchgear, the multifunctional duct comprising:
- a body (20, 30); and
- a sealing flap (40);
wherein the body comprises a first opening in a front structure (20) and a second opening in a rear structure (30);
wherein the sealing flap is located within the body;
wherein the multifunctional duct is configured to be located in a wall of a compartment of a switchgear;
wherein when located in the wall of the compartment of the switchgear, in a first state, the multifunctional duct is configured to permit the flow of air and/or gas into the compartment of the switchgear, and wherein in the first state the sealing flap is in an un-activated position and the multifunctional duct is configured to permit air and/or gas to enter the second opening in the rear structure and flow through the body and exit the first opening in the front structure such that the air and/or gas can flow into the compartment of the switchgear;
wherein when located in the wall of the compartment of the switchgear, in a second state, the multifunctional duct is configured to inhibit the flow of air and/or gas out of the compartment of the switchgear, and wherein in the second state the sealing flap is in an activated position and the multifunctional duct is configured to inhibit air and/or gas to exit the second opening in the rear structure; and
wherein when located in the wall of the compartment of the switchgear the multifunctional duct is configured such that a pressure differential between the inside of the compartment and the outside of the compartment is configured to transition the sealing flap from the un-activated position to the activated position.

## Description

### FIELD OF THE INVENTION

The present invention relates to a multifunctional duct for a compartment of a switchgear, and a switchgear.

### BACKGROUND OF THE INVENTION

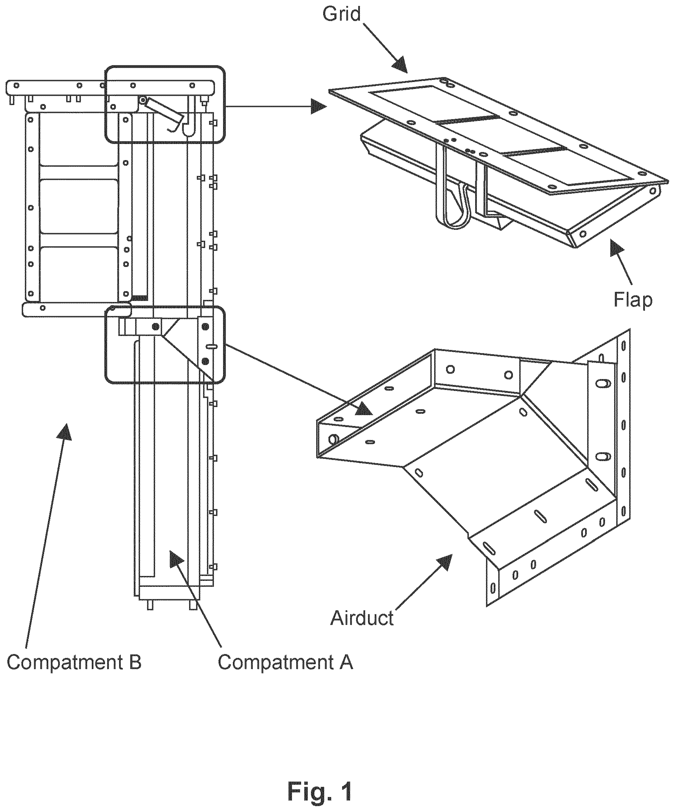

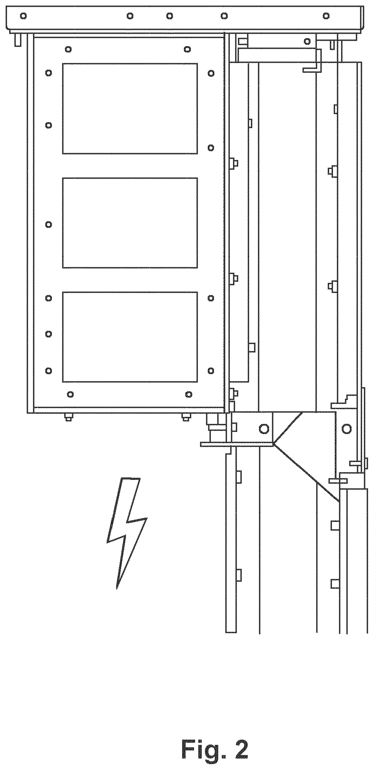

The state of the art for switchgear compartments is to use an airduct and a separate safety flap. The state of the art is shown in Figs. 1 and 2.

The two devices are used separately:
The airduct ensures a path for a natural flow of fresh air for the compartment B.

In case of an Internal arc event, the pressure wave will force the flap against the grid sealing the compartment A.

This is not always an appropriate solution, for example where there are space constraints.

There is a need to address this situation.

### SUMMARY OF THE INVENTION

Therefore, it would be advantageous to provide an improved way of cooling a swithchgear compartment and also provide for protection if an arc event occurs within the compartment.

The object of the present invention is solved with the subject matter of the independent claims, wherein further embodiments are incorporated in the dependent claims.

In a first aspect, there is provided a multifunctional duct for a compartment of a switchgear. The multifunctional duct comprises:
- a body; and
- a sealing flap.

The body comprises a first opening in a front structure and a second opening in a rear structure. The sealing flap is located within the body. The multifunctional duct is configured to be located in and/or fixed to a wall of a compartment of a switchgear. When located in and/or fixed to the wall of the compartment of the switchgear, in a first state, the multifunctional duct is configured to permit the flow of air and/or gas into the compartment of the switchgear. In the first state the sealing flap is in an un-activated position and the multifunctional duct is configured to permit air and/or gas to enter the second opening in the rear structure and flow through the body and exit the first opening in the front structure such that the air and/or gas can flow into the compartment of the switchgear.

When located in and/or fixed to the wall of the compartment of the switchgear, in a second state, the multifunctional duct is configured to inhibit the flow of air and/or gas out of the compartment of the switchgear. In the second state the sealing flap is in an activated position and the multifunctional duct is configured to inhibit air and/or gas to exit the second opening in the rear structure.

When located in and/or fixed to the wall of the compartment of the switchgear the multifunctional duct is configured such that a pressure differential between the inside of the compartment and the outside of the compartment is configured to transition the sealing flap from the un-activated position to the activated position.

Thus, rather than having separate air ducts and safety flaps, the multifunctional flap enables cooling air to enter a compartment of a switchgear, but if an arc event occurs within the compartment the rapid increase in pressure leads to the multifunctional flap preventing gases and plasma escaping from the compartment.

In the first state the sealing flap is in the un-activated position and the multifunctional duct is configured to permit air and/or gas to enter the first opening in the front structure and flow through the body and exit the second opening in the rear structure such that the air and/or gas can flow out of the compartment of the switchgear.

Thus, normally the duct when there has been no internal arc is used to enable air to flow into the compartment, but also when there has been no internal arc event the air/gas in the compartment can flow out of the compartment. However, in the event of an internal arc event the duct seals and prevents air flow out of the compartment via the second opening.

In an example, the front structure and the rear structure are separate structures and are configured to slide together.

In an example, the front structure and the rear structure are separate structures and are configured to slide together and not require fasteners.

In an example, the multifunctional duct comprises at least one locking mechanism. In the second state the at least one locking mechanism is configured to hold the sealing flap in the activated position.

In this manner, when the sealing flap is activated due to the arc event, it is held in position. This means there is no rebound as the flap is initially activated, that could lead to some gas escape otherwise, and after the initial arc event the flap is stopped from opening even if the pressure inside the compartment starts to subside, thereby ensuring that the gases internal to the compartment do not escape to the outside via the multifunctional duct.

In an example, the sealing flap comprises at least one wing. The transition of the sealing flap from the un-activated position to the activated position comprises a movement of the at least one wing.

In an example, a section of the sealing flap is connected to the body. The transition of the sealing flap from the un-activated position to the activated position comprises a rotational movement of the at least one wing relative to the section of the sealing flap connected to the body.

In an example, the sealing flap comprises two wings extending either side of the section of the sealing flap connected to the body.

Thus, a simple and effective internal safety flap is provided. The flap hinges, with one or more wings that can face into the compartment and are rotated back to block the gas route out of the duct if there is an arc event. And, one specific design is in the form of a butterfly flap, with a central section rigidly held and flap wings either side that can rotate - this provides a symmetric design that is not subjected to an overall lateral movement force as it activates due to the symmetrical application of force as the flap activates - this ensure structural integrity and a lighter and more sensitive design is made possible.

In an example, the multifunctional duct comprises a retaining frame located within the body. In the first state an outer periphery of the sealing flap is separated from the retaining frame. In the second state the outer periphery of the sealing flap is in contact with the retaining frame.

In this manner, as the sealing flap is rotated backwards it is rotated back to a frame that stops it rotating further. The outer periphery of the sealing flap and/or the outer periphery of the retaining frame can have a sealing material such as a thermoplastic to help ensure as gas tight a seal as possible when the sealing flap is activated due to the arc event.

In an example, the multifunctional duct comprises at least one venting flap. The at least one venting flap is located in at least one side wall of the body. In the first state the at least one venting flap is in an un-activated position. In the second state the at least one venting flap is in an activated position and the multifunctional duct is configured to permit air and/or gas to enter the first opening in the front structure and exit the at least one venting flap in the at least one side wall of the body. The multifunctional duct is configured such that the pressure differential between the inside of the compartment and the outside of the compartment is configured to transition the at least one venting flap from the un-activated position to the activated position.

In an example, when located in and/or fixed to the wall of the compartment of the switchgear, the multifunctional duct is configured to vent gases from the compartment via the at least one venting flap.

Thus, the multifunctional duct enables gases in the compartment to be safely vented via for example a main exhaust duct.

In an example, the multifunctional duct comprises a removable grid configured to connect to the rear structure of the multifunctional duct.

Thus, the multifunctional duct can act as an inspection window through removal of the grid providing a space for access/inspection.

In an example, when located in and/or fixed to the wall of the compartment of the switchgear, in the first state, the multifunctional duct is configured to permit the flow of air and/or gas out of the compartment of the switchgear. In the first state the multifunctional duct is configured to permit air and/or gas to enter the first opening in the front structure and flow through the body and exit the second opening in the rear structure such that the air and/or gas can flow out of the compartment of the switchgear

In a second aspect, there is provided a switchgear comprising:
- a compartment; and
- a multifunctional duct according to the first aspect. The multifunctional duct is located in and/or fixed to a wall of the compartment.

In an example, the switchgear comprises at least one exhaust duct in fluid connection with the multifunctional duct. In the second state the multifunctional duct is configured to vent gases from the compartment via the at least one venting flap.

In an example, the switchgear comprises an inspection window. The inspection window is located in and/or fixed to the wall of the compartment adjacent to the multifunctional duct.

In an example, the front structure of the multifunctional duct is mounted to the compartment and a first structure end of the inspection window is mounted to the compartment and a removable grid is configured to connect to the rear structure of the multifunctional duct and the removable grid is configured to connect to a second end structure of the inspection window.

### BRIEF DESCRIPTION OF THE DRAWINGS

Exemplary embodiments will be described in the following with reference to the following drawing:
Figs. 1 and 2 show the state of the art, where a compartment of a switchgear has a separate air duct and a separate safety flap;
Fig. 3 shows an example of the new multifunctional duct design;
Fig. 4 shows an example of the new multifunctional duct design in a first state where the sealing flap is in un-activated:
Fig. 5 shows an example of the new multifunctional duct design in a second state where the sealing flap has been activated due pressure caused by an arc event inside the compartment;
Fig. 6 shows an example of the new multifunctional duct design along with an inspection window about to be fitted to the wall of a compartment of a switchgear; and
Fig. 7 shows an example of the new multifunctional duct design.

### DETAILED DESCRIPTION OF EMBODIMENTS

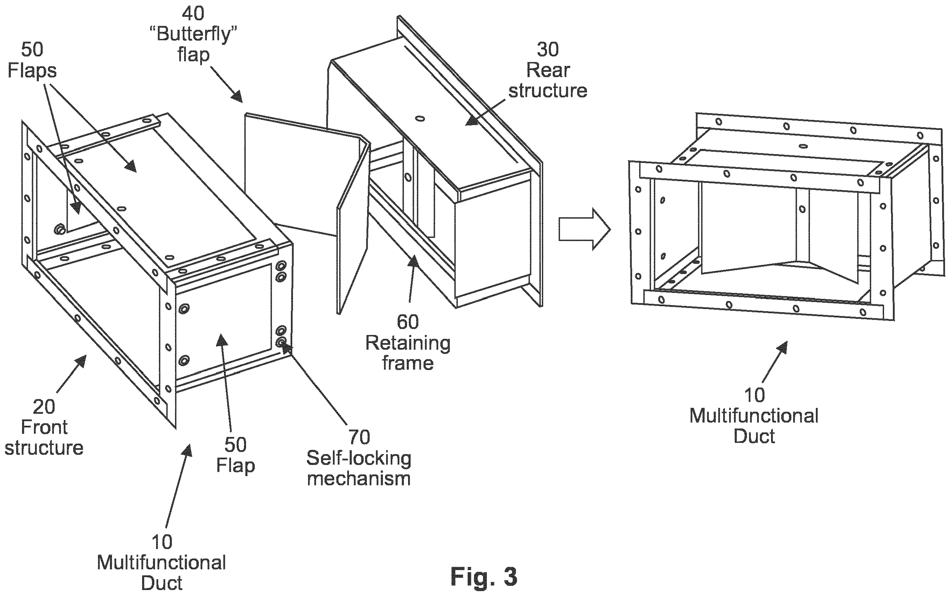

Figs. 3-7 relate to a new multifunctional duct for a compartment of a switchgear, and a switchgear having such a new multifunctional duct and where an inspection window can be provided alongside the new multifunctional duct.

Thus, a new multifunctional duct 10 for a compartment 100 of a switchgear is provided.

In an example, the multifunctional duct comprises:
- a body 20, 30; and
- a sealing flap 40.

The body comprises a first opening in a front structure 20 and a second opening in a rear structure 30. The sealing flap is located within the body. The multifunctional duct is configured to be located in and/or fixed to a wall of a compartment of a switchgear. When located in and/or fixed to the wall of the compartment of the switchgear, in a first state, the multifunctional duct is configured to permit the flow of air and/or gas into the compartment of the switchgear. In the first state the sealing flap is in an un-activated position and the multifunctional duct is configured to permit air and/or gas to enter the second opening in the rear structure and flow through the body and exit the first opening in the front structure such that the air and/or gas can flow into the compartment of the switchgear.

When located in and/or fixed to the wall of the compartment of the switchgear, in a second state, the multifunctional duct is configured to inhibit the flow of air and/or gas out of the compartment of the switchgear. In the second state the sealing flap is in an activated position and the multifunctional duct is configured to inhibit air and/or gas to exit the second opening in the rear structure.

When located in and/or fixed to the wall of the compartment of the switchgear the multifunctional duct is configured such that a pressure differential between the inside of the compartment and the outside of the compartment is configured to transition the sealing flap from the un-activated position to the activated position.

Thus, rather than having separate air ducts and safety flaps, the multifunctional flap enables cooling air to enter a compartment of a switchgear, but if an arc event occurs within the compartment the rapid increase in pressure leads to the multifunctional flap preventing gases and plasma escaping from the compartment.

In the first state the sealing flap 40 is in the un-activated position and the multifunctional duct 10 is configured to permit air and/or gas to enter the first opening in the front structure and flow through the body and exit the second opening in the rear structure such that the air and/or gas can flow out of the compartment of the switchgear.

Thus, normally the duct when there has been no internal arc is used to enable air to flow into the compartment, but also when there has been no internal arc event the air/gas in the compartment can flow out of the compartment. However, in the event of an internal arc event the duct seals and prevents air flow out of the compartment via the second opening.

In an example, the front structure 20 and the rear structure 30 are separate structures and are configured to slide together.

In an example, the front structure 20 and the rear structure 30 are separate structures and are configured to slide together and not require fasteners.

In an example, the multifunctional duct comprises at least one locking mechanism 70. In the second state the at least one locking mechanism is configured to hold the sealing flap in the activated position.

In this manner, when the sealing flap is activated due to the arc event, it is held in position. This means there is no rebound as the flap is initially activated, that could lead to some gas escape otherwise, and after the initial arc event the flap is stopped from opening even if the pressure inside the compartment starts to subside, thereby ensuring that the gases internal to the compartment do not escape to the outside via the multifunctional duct.

In an example, the sealing flap comprises at least one wing. The transition of the sealing flap from the un-activated position to the activated position comprises a movement of the at least one wing.

In an example, a section of the sealing flap is connected to the body. The transition of the sealing flap from the un-activated position to the activated position comprises a rotational movement of the at least one wing relative to the section of the sealing flap connected to the body.

In an example, the sealing flap comprises two wings extending either side of the section of the sealing flap connected to the body.

Thus, a simple and effective internal safety flap is provided. The flap hinges, with one or more wings that can face into the compartment and are rotated back to block the gas route out of the duct if there is an arc event. And, one specific design is in the form of a butterfly flap, with a central section rigidly held and flap wings either side that can rotate - this provides a symmetric design that is not subjected to an overall lateral movement force as it activates due to the symmetrical application of force as the flap activates - this ensure structural integrity and a lighter and more sensitive design is made possible.

In an example, the multifunctional duct comprises a retaining frame 60 located within the body. In the first state an outer periphery of the sealing flap is separated from the retaining frame. In the second state the outer periphery of the sealing flap is in contact with the retaining frame.

In this manner, as the sealing flap is rotated backwards it is rotated back to a frame that stops it rotating further. The outer periphery of the sealing flap and/or the outer periphery of the retaining frame can have a sealing material such as a thermoplastic to help ensure as gas tight a seal as possible when the sealing flap is activated due to the arc event.

In an example, the multifunctional duct comprises at least one venting flap 50. The at least one venting flap is located in at least one side wall of the body. In the first state the at least one venting flap is in an un-activated position. In the second state the at least one venting flap is in an activated position and the multifunctional duct is configured to permit air and/or gas to enter the first opening in the front structure and exit the at least one venting flap in the at least one side wall of the body. The multifunctional duct is configured such that the pressure differential between the inside of the compartment and the outside of the compartment is configured to transition the at least one venting flap from the un-activated position to the activated position.

In an example, when located in and/or fixed to the wall of the compartment of the switchgear, the multifunctional duct is configured to vent gases from the compartment via the at least one venting flap.

Thus, the multifunctional duct enables gases in the compartment to be safely vented via for example a main exhaust duct.

In an example, the multifunctional duct 10 comprises a removable grid 120 configured to connect to the rear structure of the multifunctional duct.

Thus, the multifunctional grid can act as an inspection window through removal of the grid 120 providing a space for access/inspection.

In an example, when located in and/or fixed to the wall of the compartment of the switchgear, in the first state, the multifunctional duct is configured to permit the flow of air and/or gas out of the compartment of the switchgear. In the first state the multifunctional duct is configured to permit air and/or gas to enter the first opening in the front structure and flow through the body and exit the second opening in the rear structure such that the air and/or gas can flow out of the compartment of the switchgear
From the above, it is clear that a switchgear can have such a multifunctional duct.

Thus, in an example a switchgear comprises:
- a compartment 100; and
- a multifunctional duct according to the first aspect. The multifunctional duct is located in and/or fixed to a wall of the compartment.

In an example, the switchgear comprises at least one exhaust duct in fluid connection with the multifunctional duct. In the second state the multifunctional duct is configured to vent gases from the compartment via the at least one venting flap.

In an example, the switchgear comprises an inspection window 110. The inspection window is located in and/or fixed to the wall of the compartment adjacent to the multifunctional duct.

In an example, the inspection window 110 is a multifunctional duct 10.

In an example, the front structure of the multifunctional duct is mounted to the compartment and a first structure end of the inspection window is mounted to the compartment and a removable grid 120 is configured to connect to the rear structure of the multifunctional duct and the removable grid is configured to connect to a second end structure of the inspection window.

Thus, the multifunctional duct 10 can act as an inspection window 110 through part of the duct being removed, and where a rectangular space can then form an inspection window. There need only be one multifunctional duct, that can act as an inspection window as detailed above, or two multifunctional ducts can be provided next to each other, and where one of the two can act as an inspection window.

Specific embodiments are now described in further detail, where reference is again made to Figs. 3-7.

As shown in Figure 3 the front structure 20 and the rear structure 30 of the multifunctional duct 10 are separate pieces that can slide together, which aids assembly. In an example, the front structure 20 and the rear structure 30 are separate structures and are configured to slide together and not require fasteners.

The sealing flap 40 in the form of a butterfly flap is located within the multifunctional duct when assembled, and the wings of the butterfly flap are angled slightly towards the inside of the compartment.

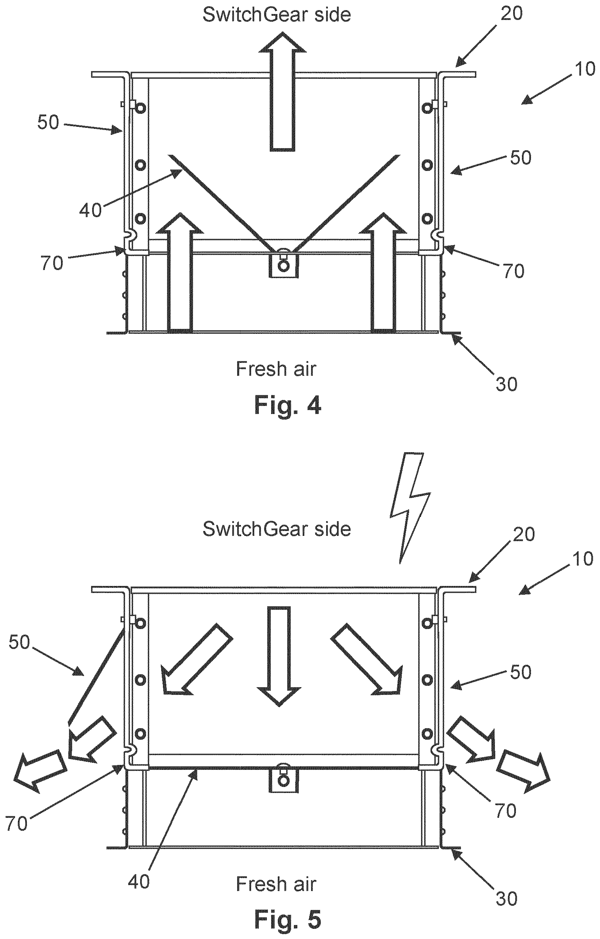

As shown in Figures 4 and 5 the butterfly flap 40 of the multifunctional duct allows air to flow into the compartment, and indeed out of the compartment. However, if there is an arc event there is a rapid increase in pressure and the pressure wave pushes the butterfly flap 40 backwards against the retaining frame 60 and the gases cannot exit through the opening in the rear structure 30. But the pressure wave opens the venting flaps 50 in the side walls of the multifunctional duct and can be vented out of the compartment via an exhaust duct. As the pressure drops, the butterfly flap 40 is held in position via a self locking mechanism 70 on the inside of the multifunctional duct to continue to stop gases generated as part of the arc event from exiting the compartment via the opening in the rear structure.

Thus, while the switchgear is operating in standard conditions, the Multifunctional duct behaves like an air duct; Fresh air can flow into the switchgear and perform the required cooling effect.

In the event of an Internal arc, the pressure wave forces the "butterfly" flap against its holding frame and seal the compartment. A self-locking mechanism keeps the "butterfly" flap in its position. The same pressure will force the side flaps open, connecting the system to the main exhaust duct.

The Multifunctional duct allows both, safety and natural cooling performance.

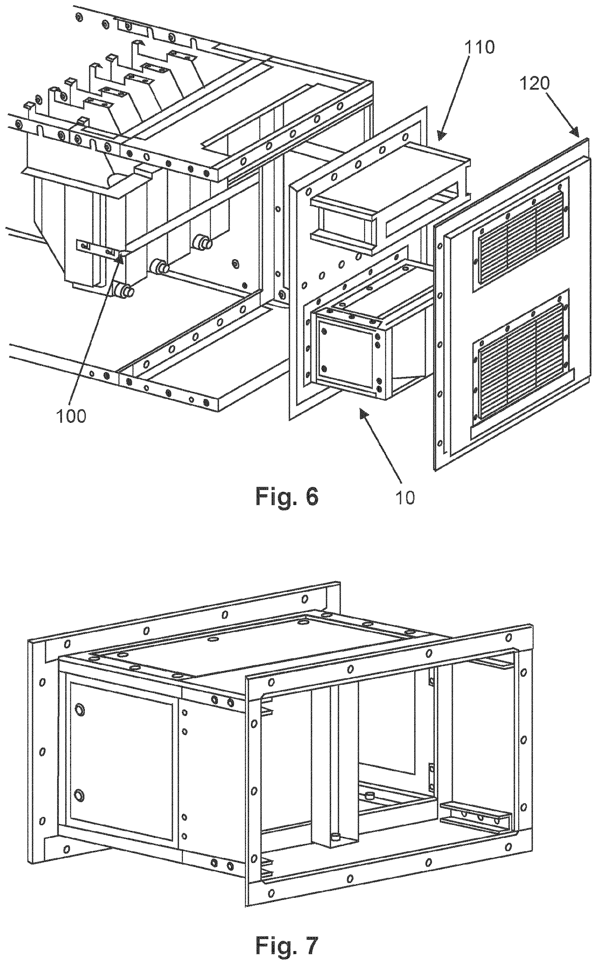

As shown in Fig. 6, the multifunctional duct 10 can be used alongside an inspection window 110, which can help service inspection. Thus, a grid 120 can be removed and the inside of the compartment, such as a cable compartment, inspected. The inspection window can be utilized because the multifunctional duct has saved space as there is no requirement for a separate air duct and safety flap. Even wit one multifunctional duct this duct can operate as the inspection window, space is saved, and installation is simplified through having just one multifunctional duct that can itself be assembled easily.

The multifunctional duct 10 itself can operate as the inspection window 110, where removal of a part of the duct, for example a grid 120, provides a rectangular space to provide access/viewing capability through the hole. However, two multifunctional ducts can be provided, where one or both can operate as an inspection window.

Thus, in summary
The new multifunctional duct can be a cooling duct made of two main structures.

The new multifunctional duct can make use of a fastener-free system to connect the main structures.

The new multifunctional duct can use a special slide-in system allows easier assembling phase.

The new multifunctional duct can be saves space by combining safety and necessary cooling.

The new multifunctional duct provides for reliability of the flap system - no mechanisms are required compared to the solutions currently in use.

The new multifunctional duct saves space enabling an inspection window to be installed that allows service entry to the Pressure Relief Duct - wall mounting application.

The new multifunctional duct has a self-Locking mechanism that ensures the connection and seals the compartment.

### Reference Numerals

- 10: Multifunctional duct
- 20: Front structure of body
- 30: Rear structure of body
- 40: Sealing flap
- 50: Venting flap(s)
- 60: Retaining frame
- 70: Locking mechanism(s)
- 80: Outer strips of first and second edge portions
- 90: Section of outer strip formed from a bent panel
- portion 100: Compartment
- 110: Inspection window
- 120: Removable grid

## Claims

1. A multifunctional duct (10) for a compartment (100) of a switchgear, the multifunctional duct comprising:
- a body (20, 30); and
- a sealing flap (40);
wherein the body comprises a first opening in a front structure (20) and a second opening in a rear structure (30);
wherein the sealing flap is located within the body;
wherein the multifunctional duct is configured to be located in and/or fixed to a wall of a compartment of a switchgear;
wherein when located in and/or fixed to the wall of the compartment of the switchgear, in a first state, the multifunctional duct is configured to permit the flow of air and/or gas into the compartment of the switchgear, and wherein in the first state the sealing flap is in an un-activated position and the multifunctional duct is configured to permit air and/or gas to enter the second opening in the rear structure and flow through the body and exit the first opening in the front structure such that the air and/or gas can flow into the compartment of the switchgear;
wherein when located in and/or fixed to the wall of the compartment of the switchgear, in a second state, the multifunctional duct is configured to inhibit the flow of air and/or gas out of the compartment of the switchgear, and wherein in the second state the sealing flap is in an activated position and the multifunctional duct is configured to inhibit air and/or gas to exit the second opening in the rear structure; and
wherein when located in and/or fixed to the wall of the compartment of the switchgear the multifunctional duct is configured such that a pressure differential between the inside of the compartment and the outside of the compartment is configured to transition the sealing flap from the un-activated position to the activated position.

2. Multifunctional duct according to claim 1, wherein the multifunctional duct comprises at least one locking mechanism (70), and wherein in the second state the at least one locking mechanism is configured to hold the sealing flap in the activated position.

3. Multifunctional duct according to any of claims 1-2, wherein the sealing flap comprises at least one wing, and wherein the transition of the sealing flap from the un-activated position to the activated position comprises a movement of the at least one wing.

4. Multifunctional duct according to claim 3, wherein a section of the sealing flap is connected to the body and wherein the transition of the sealing flap from the un-activated position to the activated position comprises a rotational movement of the at least one wing relative to the section of the sealing flap connected to the body.

5. Multifunctional duct according to claim 4, wherein the sealing flap comprises two wings extending either side of the section of the sealing flap connected to the body.

6. Multifunctional duct according to any of claims 1-5, wherein the multifunctional duct comprises a retaining frame (60) located within the body, wherein in the first state an outer periphery of the sealing flap is separated from the retaining frame and wherein in the second state the outer periphery of the sealing flap is in contact with the retaining frame.

7. Multifunctional duct according to any of claims 1-6, wherein the multifunctional duct comprises at least one venting flap (50), wherein the at least one venting flap is located in at least one side wall of the body, wherein in the first state the at least one venting flap is in an un-activated position, wherein in the second state the at least one venting flap is in an activated position and the multifunctional duct is configured to permit air and/or gas to enter the first opening in the front structure and exit the at least one venting flap in the at least one side wall of the body, and wherein the multifunctional duct is configured such that the pressure differential between the inside of the compartment and the outside of the compartment is configured to transition the at least one venting flap from the un-activated position to the activated position.

8. Multifunctional duct according to claim 7, wherein when located in and/or fixed to the wall of the compartment of the switchgear, the multifunctional duct is configured to vent gases from the compartment via the at least one venting flap.

9. Multifunctional duct according to any of claims 1-8, wherein the multifunctional duct comprises a removable grid (120) configured to connect to the rear structure of the multifunctional duct.

10. Multifunctional duct according to any of claims 1-9, wherein when located in and/or fixed to the wall of the compartment of the switchgear, in the first state, the multifunctional duct is configured to permit the flow of air and/or gas out of the compartment of the switchgear, and wherein the multifunctional duct is configured to permit air and/or gas to enter the first opening in the front structure and flow through the body and exit the second opening in the rear structure such that the air and/or gas can flow out of the compartment of the switchgear.

11. A switchgear comprising:
- a compartment (100); and
- a multifunctional duct according to any of claims 1-10;
wherein the multifunctional duct is located in and/or fixed to a wall of the compartment.

12. Switchgear according to claim 11 comprising a multifunctional duct according to any of claims 7-8 or a multifunctional duct according to any of claims 9-10 when dependent upon any of claims 7-8, wherein the switchgear comprises at least one exhaust duct in fluid connection with the multifunctional duct, wherein in the second state the multifunctional duct is configured to vent gases from the compartment via the at least one venting flap.

13. Switchgear according to any of claims 11-12, wherein the switchgear comprises an inspection window (110), and wherein the inspection window is located in and/or fixed to the wall of the compartment adjacent to the multifunctional duct.

14. Switchgear according to claim 13, wherein the inspection window (110) is a multifunctional duct (10) of any of claims 1-10.
